Europäisches Patentamt

European Patent Office

Office européen des brevets

(19)

(11) Veröffentlichungsnummer: **0 374 484**

**A1**

(12) **EUROPÄISCHE PATENTANMELDUNG**

(21) Anmeldenummer: 89121285.4

(51) Int. Cl.⁵: **B60T 8/00, B60T 8/26**

(22) Anmeldetag: 17.11.89

(30) Priorität: 22.12.88 DE 3843189
09.03.89 DE 3907626
07.04.89 DE 3911253

(43) Veröffentlichungstag der Anmeldung:
27.06.90 Patentblatt 90/26

(84) Benannte Vertragsstaaten:
DE FR GB IT SE

(71) Anmelder: **ROBERT BOSCH GMBH**
**Postfach 10 60 50**
**D-7000 Stuttgart 10(DE)**

(72) Erfinder: **Wrede, Jürgen, Dipl-Ing.**
**Seeschwalbenweg 1**
**D-7000 Stuttgart 50(DE)**

(54) **Verfahren und Einrichtung zum Abstimmen der Bremswirkung.**

(57) Es wird ein Verfahren und eine Einrichtung zum Abstimmen der Bremswirkung an einer Sattelzugmaschine (1) und dem Sattelanhänger (2) vorgeschlagen.

Dazu werden die Achslasten ($G_v$ und $G_h$) an der Sattelzugmaschine (1) ermittelt und daraus die Bremsabstimmung berechnet. Die Bremsdruckeinsteuerung erfolgt dann entsprechend den ermittelten Achslasten.

FIG.1

EP 0 374 484 A1

## Verfahren und Einrichtung zum Abstimmen der Bremswirkung

Stand der Technik

Die Erfindung bezieht sich auf ein Verfahren und eine Einrichtung zum Abstimmen der Bremswirkung nach der Gattung des Hauptanspruchs.

Ein solches Verfahren und eine solche Einrichtung sind bekannt (DE-OS 34 28 192). Bei dieser bekannten Einrichtung wird an den Verbindungsmitteln Zugdeichsel/Sattelkupplung zwischen dem Zugwagen und dem Anhänger ein Dehnmeßstreifen verwendet, um die dort bei einem Bremsvorgang auftretenden Zug- bzw. Druckkräfte zu messen und mit Hilfe dieser Größe die jeweils notwendigen Bremskräfte zu bestimmen, um die Bremswirkung zwischen Zugwagen und Anhänger abzustimmen.

Nun sind aber die Kräfte an dieser Stelle sehr schwer genau zu messen, weil die Krafteinleitungen in den Fahrzeugrahmen schlecht zu erfassen sind.

Dazu kommt, daß die Bremsanlagen von Zugfahrzeugen und Anhängern von verschiedenen Herstellern unterschiedlich ausgelegt werden und außerdem schwer beherrschbare Faktoren, wie unterschiedliche Belagreibwerte o. dgl. Einfluß haben. Deshalb ist die Abstimmung der Bremswirkung zwischen Sattelzugmaschine und Sattelanhänger bis heute noch nicht befriedigend gelöst. Insbesondere können im Mischbetrieb, wobei verschiedene Zugmaschinen mit verschiedenen Anhängern betrieben werden, Probleme auftreten.

Ziel der Erfindung ist es, über die Messung geeigneter Größen die Bremswirkungen von Zugfahrzeug und Anhänger aufeinander abzustimmen.

Ausgehend von einem einfacher zu behandelnden Lastkraftwagenzug heißt optimale Bremsabstimmung, beide Teile bremsen sich selbst mit der gleichen Abbremsung ab. Der Anhänger schiebt nicht und zieht nicht, was gleichbedeutend ist mit Deichsellängskraft = Null. Bei gelenkiger Verbindungsstange wird zwischen Zugwagen und Anhänger an der Schnittstelle beider Fahrzeuge kein Moment übertragen.

Überträgt man diese Verhältnisse auf ein Sattel-Kraftfahrzeug, so geht eine Schnittstelle irgendwo quer durch den Sattelanhänger. Diese theoretische Schnittstelle verschiebt sich je nach Beladungsverteilung des Sattelanhängers. An der Trennstelle wird ein Moment erforderlich, um die Gleichgewichtsbedingungen zu erfüllen. Jedenfalls wirkt ein Teil des Sattelanhänger-Gewichts auf die Sattelanhänger-Achse und muß von dieser auch abgebremst werden, der andere Teil des Gewichts belastet jedoch die Sattelzugmaschine und muß von dieser abgebremst werden. Bei optimaler Bremsabstimmung müßten also an dieser fiktiven Schnittstelle im Sattelanhänger die Längskräfte zu Null werden. Sie lassen sich jedoch offensichtlich dort nicht messen. Gemessen werden kann - wenn überhaupt - nur an der fahrzeugtechnischen Schnittstelle, also an der Sattelkupplung oder dem Kingpin und den benachbarten, im Kraftfluß liegenden Teilen. Nach dem oben gesagen darf dort jedoch die Kraft in Längsrichtung nicht zu Null werden wie beim Lastkraftwagenzug. Falls die Längskraft zu Null würde, müßte die Sattelanhänger-Achse nämlich die Bremskraft für den gesamten Sattelanhänger aufbringen, was zu deren vorzeitigem Blockieren führen würde, und die Sattelzugmaschine würde unterbremst werden.

Vorteile der Erfindung

Das erfindungsgemäße Verfahren und die Einrichtung haben gegenüber dem Bekannten den Vorteil, daß die Bremsabstimmung zwischen Zugwagen und Anhänger auf einfache Weise durchgeführt werden kann. Die Achslasten sind mit preiswerten Elementen, wie Drucksensoren oder Potentiometern leicht zu ermitteln und mit Hilfe der ermittelten Größe kann die Bremsabstimmung präzise durchgeführt werden.

Da die bei einem Lastkraftwagenzug mögliche "Deichsellängskraft = 0" beim Sattelzug nicht anwendbar ist, muß eine neue Zieldefinition für die Bremsabstimmung gefunden werden. Generell heißt die Forderung für optimale Geradeausbremsung auf homogener Fahrbahn: gleicher Kraftschluß an allen Achsen, d.h. die Bremskraft an einer Achse ist proportional zu ihrer Achslast und die Quotienten Bremskraft/Achslast sind an allen Achsen gleich (gleiche Kraftschlußbeanspruchung).

Bei einem Sattelanhänger bedeutet dies: Die Bremskraft an der Sattelanhänger-Achse steht zu deren Achslast im gleichen Verhältnis wie die horizontale Sattelkraft in Längsrichtung (entspricht dem von der Sattelzugmaschine übernommenem Bremskraftanteil) zur vertikalen Sattelkraft. Ist dieses Verhältnis nicht gleich, so wird die Sattelanhänger-Achse entweder über- oder unterbremst, was durch Druckabbau bzw. Druckerhöhung korrigiert werden kann.

Einem Rechner müssen immer die vier Werte: Achslast und Bremskraft des Sattelanhängers, horizontale und vertikale Sattelkraft zur Verfügung stehen, so daß er die beiden Quotienten bilden kann. Aus dem Vergleich beider Quotienten trifft er die Entscheidung Druckabbau, Druckerhöhung oder gleichbleibender Druck.

Damit ist die Bremskraft des Sattelanhängers optimal abzustimmen. Die Bremsabstimmung innerhalb. der Sattelzugmaschine zwischen Vorder- und Hinterachse ist davon noch nicht berührt. Falls jedoch an allen Achsen gleicher Kraftschluß herrscht, ist die obige Forderung auch hier automatisch erfüllt.

Es ist hier festzuhalten, daß ein wesentlicher Vorteil der Erfindung darin besteht, daß ausschließlich an der Sattelzugmaschine gemessen werden kann und daß keinerlei Meßwerte vom Sattelanhänger an die Sattelzumaschine übergeben werden müssen.


Zeichnung

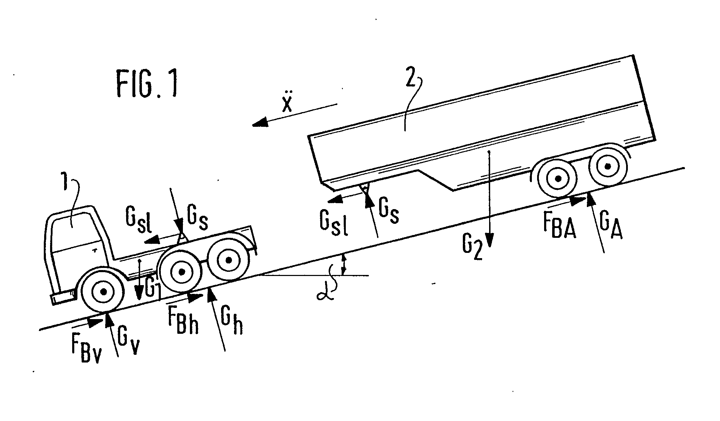

Ein Ausführungsbeispiel der Erfindung ist in der Zeichnung (Figur 1 bis 4) dargestellt und in der nachfolgenden Beschreibung näher erläutert.

Beschreibung des Ausführungsbeispieles

Ein Sattelkraftfahrzeug besteht aus einer Sattelzugmaschine 1 und einem Sattelanhänger 2. Das Sattelkraftfahrzeug 1, 2 befindet sich auf einer Fahrbahn 3 mit der Längsneigung $<\alpha$.

In der Darstellung greifen an der Sattelzugmaschine 1 verschieedene Kräfte an:

$G_1$ = Gewicht der Sattelzugmaschine
$G_S$ = vertikale Sattelkraft
$G_{S1}$ = horizontale Sattelkraft
$G_V$ = Vorderachslast
$G_h$ = Hinterachslast
$F_{Bv}$ = Vorderachsbremskraft
$F_{Bh}$ = Hinterachsbremskraft

An dem Sattelanhänger wirken folgende Kräfte:

$G_2$ = Gewicht des Sattelanhängers
$G_S$ = vertikale Sattelkraft
$G_{S1}$ = horizontale Sattelkraft
$G_A$ = Achslast des Sattelanhängers
$F_{BA}$ = Bremskraft der Achsen des Sattelanhängers
$x$ = Fahrzeugbeschleunigung (positiv) bzw. -verzögerung (negativ)

Zur Berechnung des Sattelanhänger-Gewichts $G_2$, das bei ungebremster Fahrt ermittelt wird, benötigt man die Achslasten $G_V$ und $G_h$ der Sattelzugmaschine 1, außerdem die Fahrzeugbeschleunigung X, die Fahrbahnlängsneigung $<\alpha$ und darüber hinaus konstante Daten der Sattelzugmaschine, z.B. Radstand.

Nun kann die Achslast des Sattelanhängers beim Bremsen berechnet werden aus den Achslasten $G_V$ und $G_h$ der Sattelzugmaschine 1, der Fahrzeugverzögerung $x$, mehrerer Konstanten K und dem vorher ermittelten Sattelauflieger Gewicht $G_2$.

Auf diese Weise werden alle Achslasten des Sattelkraftfahrzeuges erfaßt. Die Bremsdruckeinsteuerung erfolgt dann entsprechend den ermittelten Achslasten.

Obwohl sich das Ausführungsbeisiel nur auf ein Sattelkraftfahrzeug bezieht, liegt es auf der Hand, daß solche Bremsdrucksteuerungen mit Hilfe der Achslast auch für andere Fahrzeugkombinationen, wie Lastkraftwagenzüge und Zwitter zwischen Sattelkraftfahrzeug und Lastkraftwagenzug möglich sind.

Es liegt aber auch im Rahmen der Erfindung, mit Hilfe der ermittelten Achslasten mit anderen möglichen Berechnungen eine Bremsabstimmung durchzuführen.

Mehrere Beispiele hierfür sind in der beiliegenden Auflistung Seite 8 erläutert.

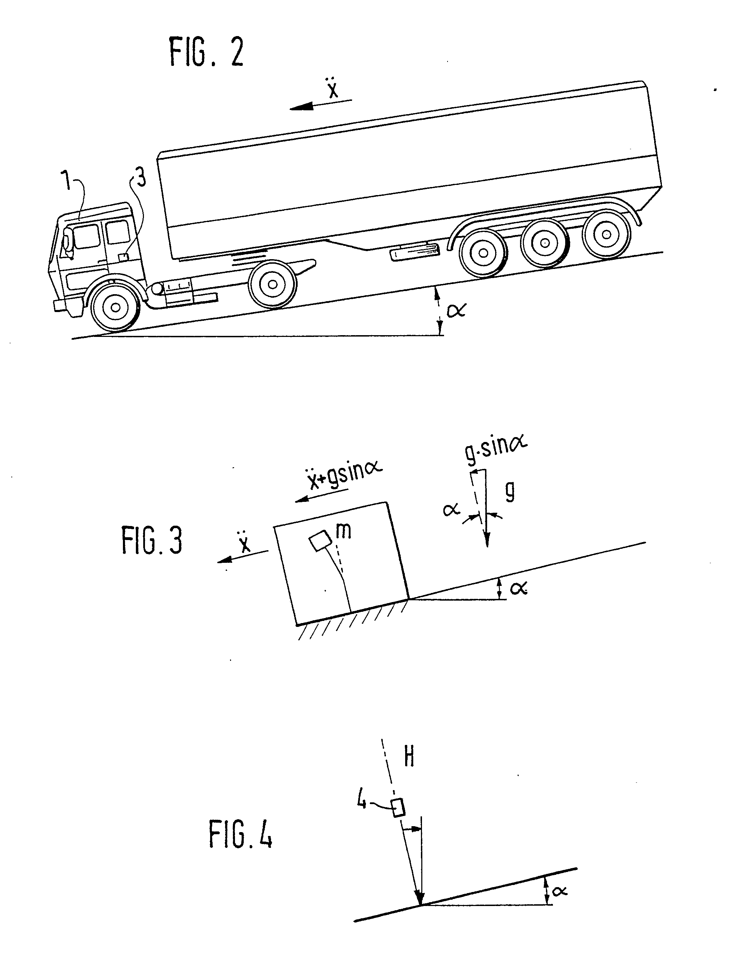

Es ist auch möglich, statt einer bei geneigter Fahrbahn durchgeführten Neigungsmessung des Fahrzeuges einen Beschleunigungssensor 3 zur Messung der Beschleunigung $x$ zu verwenden. Die Anordnung dieses Beschleunigungssensors 3 ist in der Figur 2 dargestellt, wo zu erkennen ist, daß der Sensor 3 auf der Sattelzugmaschine 1 angeordnet ist. Die Fahrbahnlängsneigung ist auch hier mit $<\alpha$ angegeben.

Der Sensor 3 arbeitet, wie die Figur 3 zeigt, nach dem Trägheitsprinzip, d.h. mit einer Masse m, und ist auf dem Fahrzeug so ausgerichtet, daß bei einer Fahrt in der Ebene nur die Fahrzeugbeschleunigung $x$ gemessen wird. $<\alpha$ beträgt dabei 0. Bei geneigter Fahrbahn und dadurch geneigtem Fahrzeug addiert sich zum reinen Signal der Beschleunigung $x$ der winkelabhängige Anteil der Endbeschleunigung g, also g.sinα. Das Summmensignal $x$ + g.sinα wird dann für die Berechnung der Bremsabstimmung verwendet.

Wird aber für manche Anwendung ein getrenntes Beschleunigungs- und Neigungswinkel-Signal gebraucht, kann der beispielsweise aus der Radrehzahl mittels ABS-Sensor errechnete Wert der Beschleunigung $x$ von dem Summenglied $x$ + g'sinα abgezogen werden.

Es ist aber auch möglich, einen Sensor für die Beschleunigung $x$ zu verwenden, dessen Meßrichtung die Fahrzeughochachse H ist, so wie in Figur 4 dargestellt. Bei einer derartigen Messung kann dann ein eventuell ohnehin vorhandener Sensor 4 für die Aufbaubeschleunigung, wie er bei einer Fahrwerksregelung Anwendung findet, verwendet wer den. Dessen mittleres Signal entspricht, wenn Schwingungen herausgefiltert werden, in der Ebene immer der Erdbeschleunigung g = 9,81 m/s². Bei einer Neigung der Fahrbahn verändert sich der Mittelwert zu g.cosα, wie die Figur 4 zeigt. Daraus kann dann der Neigungswinkel α errechnet werden. Auf diese Weise ist eine einfache Neigungsmessung zur Abstimmung der Bremswirkung erstellbar.

Schließlich ist es auch möglich, auf die Ermittlung des Anhängergewichtes ganz zu verzichten und die Abstimmung der Bremswirkung zwischen den beiden Fahrzeugen durch die Beziehung:

horizontale Sattelkraft $G_{s1}$ zu vertikaler Sattelkraft $G_s$ vorzunehmen. Dabei muß angestrebt werden, daß eine Regelabweichung

$$\frac{G_{s1}}{G_s} - \frac{x}{g}$$

möglichst gering ist.

Auflistung anderer möglicher Berechnungen der Bremsabstimmung

| Fall Nr. | Kurzbeschreibung | | | Im Sattelanh. (SA) gemessene Größen | In Sattelzugm. (SZH) gemessene Größen | | errechnete Zwischengrößen | errechnete Größen zur Bremsabstimmung ($\mu$ = Kraftschlußbeanspruchung) |
|---|---|---|---|---|---|---|---|---|
| | nur Abstimmung des SA (Bremskraftverteilung zwischen VA und HA der SZM wird nicht geregelt, dies kann z.B. durch herkömmliche ALBs geschehen) | Sensoren Steuerung und Stellglieder befinden sich vollständig in SZM | | | | | | |
| 2.2 | | | Messung der Achslasten der SZM | | $Gv$, $Gh$ | Gewicht der SZM, Schwerpunktlage der SZM Radstand u. Lage des Sattelpunktes der SZM | $G_2$ | $G_s$, $G_s$ $F_{BA}$ $GA$ |
| 2.3 | | | Messung der Sattelkraft längs u. einer Achslast der SZM | | $G_{sl}$ $Gv$ oder $Gh$ | | $G_2$ $Gv$ oder $Gh$ | $G_s$, $F_{BA}$ $GA$ |
| 2.4 | | | Messung der vertika-Sattelkraft u. einer Achslast der SZM | − | $G_s$ $Gv$ oder $Gh$ (z, p) | | | $G_{sl}$, $F_{BA}$ $GA$ |
| 2.5 | | | Messung der Sattellasten u. ein. Achslast der SZM statt Neigungsmessung | | $G_s$, $G_{sl}$ $Gv$ oder $Gh$ (z) | | $G_2$, $p$ $Gv$ oder $Gh$ | $F_{BA}$ $GA$ |
| 2.6 | | | Messung der Achslasten der SZM u. einer Sattellast statt Neigungsmessung | | $Gv$, $Gh$ $G_s$ oder $G_{sl}$ | | $G_2$, $p$ | $F_{BA}$, $GA$ $G_{sl}$ oder $G_s$ $\quad \mu_{sA} \geq \dfrac{F_{BA}}{GA}$ $\dfrac{G_{sl}}{G_s}$ |

| Fall Nr. | Kurzbeschreibung | | Im Sattelanh. (SA) gemessene Größen | In Sattelzugm. (SZH) gemessene Größen | | | errechnete Zwischengrößen | errechnete Größen zur Bremsabstimmung ($\mu$ = Kraftschlußbeanspruchung) | |
|---|---|---|---|---|---|---|---|---|---|
| 1.1 | autonomer SA, d.h.  Sensoren, Steuerung und Stellglieder für Bremsabstimmung befinden sich vollständig im SA | siehe Seite 8 | $G_s$, $G_{sl}$  $F_{BA}$, GA | – | – | – | – | – | $u_{SA}=\dfrac{F_{BA}}{GA}$  $\dfrac{G_{sl}}{G_s}$ |
| 1.2 | | | $z$  $p$  $G_{sl}$  $G_s$ | – | – | – | $G_2$ | $F_{BA}$, GA | |
| 1.3 | | | $z$  $p$  $G_{sl}$  GA | | | | | $G_s$,  $F_{BA}$ | |
| 1.4 | | | $F_{BA}$ | | | | | $G_s$, GA | |
| 3.1 | Abstimmung des gesamten Sattel-Kfz (VA, HA u. SA) | | – | $G_s$, $G_{sl}$  zusätzlich  $F_{BV}$, $F_{Bh}$ | | | $G_2$ | $F_{BA}$, GA  Gv, Gh | $\mu_{VA}=\dfrac{F_{BV}}{G_V}$ |
| 3.2 | | | | wie Fall 2.2 – 2.6  zusätzlich  $F_{BV}$, $F_{Bh}$ | wie Seite 8 | | wie Fall 2.2 – 2.6 | wie Fall 2.2 – 2.6 | $\mu_{HA}=\dfrac{F_{Bh}}{Gh}$ |
| 4. | Abstimmung des gesamten Sattel-Kfz (VA, HA u. SA), direkte Messung aller Größen | | GA  $F_{BA}$ | Gv, Gh  $F_{BV}$, $F_{Bh}$ | – | – | – | – | $\mu_{SA}=\dfrac{F_{BA}}{G_A}$ |

$$p = \tan \alpha \,, \quad z = \frac{x}{g}$$

**Ansprüche**

1. Verfahren und Einrichtung zum Abstimmen der Bremswirkung an einer Sattelzugmaschine und einem Sattelanhänger, gekennzeichnet durch das Messen von Achslasten ($G_v$ und $G_h$ ) und anderer Größen vorzugsweise an der Sattelzugmaschine und der Berechnung der Bremsabstimmung aus diesen Achslasten ($G_v$ und $G_h$) und den anderen Größen und aus mehreren von fahrzeugspezifischen Werten (Schwerpunktlage, Leergewicht $G_1$ und Lage des Sattelpunktes) abhängigen Konstanten (K).

2. Verfahren und Einrichtung nach Anspruch 1 für ein luftgefedertes Fahrzeug, dadurch gekennzeichnet, daß die Achslasten ($G_v$, $G_h$) von Drucksensoren ermittelt werden.

3. Verfahren und Einrichtung nach Anspruch 1 für ein stahlgefedertes Fahrzeug, dadurch gekennzeichnet, daß die Achslasten ($G_v$, $G_h$) von Potentiometern ermittelt werden.

4. Verfahren und Einrichtung nach einem der Ansprüche 1 bis 3, dadurch gekennzeichnet, daß zusätzlich zu den Achslasten ($G_v$, $G_h$) als andere Größe die Fahrzeugverzögerung $\ddot{x}$ (positiv und negativ) ermittelt, gegebenenfalls mit mehreren Fahrzeug-Konstanten (K) verrechnet und zur Berechnung der Bremsabstimmung der beiden Fahrzeugteile (1, 2) verwendet wird.

5. Verfahren und Einrichtung nach einem der Ansprüche 1 bis 4, dadurch gekennzeichnet, daß zusätzlich zu den Achslasten ($G_v$, $G_h$) als andere Größe die Fahrbahn-Längsneigung (Winkel $\alpha$ ) ermittelt wird und zur Berechnung der Bremsabstimmung der beiden Fahrzeugteile (1, 2) verwendet wird.

6. Verfahren und Einrichtung nach einem der Ansprüche 1 bis 5, dadurch gekennzeichnet, daß zusätzlich zu den Achslasten ($G_v$, $G_h$) der Sattelzugmaschine (1) auch die Achslasten ($G_A$) des Sattelanhänger (2) ermittelt werden und zur Berechnung der Bremsabstimmung der beiden Fahrzeugteile verwendet werden.

7. Verfahren und Einrichtung nach Anspruch 6, dadurch gekennzeichnet, daß das Gewicht ($G_2$) des Sattelanhängers (2) aus den gemessenen Größen (Achslasten der Sattelzugmaschine $G_v$ und $G_h$, Fahrzeugbeschleunigung $\ddot{x}$ , Fahrbahnlängsneigung $<\alpha$ und den fahrzeugspezifischen Werten) bei ungebremster Fahrt ermittelt wird.

8. Verfahren und Einrichtung nach Anspruch 7, dadurch gekennzeichnet, daß aus dem Gewicht ($G_2$) des Sattelanhängers (2) und aus den anderen, gemessenen Größen (Achslasten der Sattelzugmaschine $G_v$ und $G_h$, Fahrzeugbeschleunigung $\ddot{X}$, Fahrbahnlängsneigung $<\alpha$ und den fahrzeugspezifischen Werten) beim Bremsen die Achslast ($G_A$) des Sattelanhängers (2) ermittelt wird.

9. Verfahren und Einrichtung nach einem der Ansprüche 1 bis 5, dadurch gekennzeichnet, daß der zum Sattelanhänger (2) ausgesteuerte Bremsdruck so gesteuert bzw. geregelt wird, daß eine Regelabweichung

$$\frac{G_{s1}}{G_s} - \frac{\ddot{x}}{g}$$

möglist gering ist.

10. Verfahren und Vorrichtung nach Anspruch 9, dadurch gekennzeichnet, daß die Regelabweichung aus den gemessenen Größen: Vorderachslast $G_v$, Hinterachslast $G_h$ sowie der Fahrzeugverzögerung $\ddot{x}$ und mehreren Fahrzeugkosntanten K ermittelt wird.

FIG. 1

# FIG. 2

$\ddot{X}$

1

3

$\alpha$

# FIG. 3

$\ddot{x}+g\sin\alpha$

$g\cdot\sin\alpha$

$\alpha$  $g$

$\ddot{X}$

$\square$ m

$\alpha$

# FIG. 4

H

4 $\square$

$\alpha$

# EUROPÄISCHER RECHERCHENBERICHT

Nummer der Anmeldung

EP 89 12 1285

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 288 866 (EATON CORP.)<br>* Seite 5, Zeilen 41-47; Seite 9, Zeilen 7-12 *<br>--- | 1-4 | B 60 T 8/00<br>B 60 T 8/26 |
| X | EP-A-0 189 082 (WABCO WESTINGHOUSE FAHRZEUGBREMSEN GMBH)<br>* Seite 17, Zeile 32 - Seite 18, Zeile 11 *<br>--- | 1-4 | |
| A | EP-A-0 246 791 (LUCAS INDUSTRIES)<br>* Spalte 4, Zeilen 5-10 *<br>--- | 7 | |
| A | EP-A-0 246 790 (LUCAS INDUSTRIES)<br>* Seite 3, Zeilen 49-56 *<br>----- | 1-4,7 | |

|  |
|---|
| RECHERCHIERTE SACHGEBIETE (Int. Cl.5) |
| B 60 T |

Der vorliegende Recherchenbericht wurde für alle Patentansprüche erstellt

| Recherchenort | Abschlußdatum der Recherche | Prüfer |
|---|---|---|
| BERLIN | 05-03-1990 | BLURTON M D |